## Europäisches Patentamt
## European Patent Office
## Office européen des brevets

(19)

(11) Publication number: **0 044 635**
**A1**

(12) **EUROPEAN PATENT APPLICATION**

(21) Application number: **81302977.4**

(22) Date of filing: **30.06.81**

(51) Int. Cl.³: **C 08 F 10/00**
**C 08 F 4/64, C 08 F 4/02**

(30) Priority: **09.07.80 JP 92653/80**

(43) Date of publication of application:
**27.01.82 Bulletin 82/4**

(84) Designated Contracting States:
**BE DE FR GB IT NL**

(71) Applicant: **TOA NENRYO KOGYO K.K.**
**1-1 Hitotsubashi, 1-Chome Chiyoda-Ku Tokyo(JP)**

(72) Inventor: **Imai, Masafumi**
**1902-5, Ooaza Kamekubo Ooi-machi Iruma-gun Saitama-ken(JP)**

(72) Inventor: **Miyazaki, Makoto**
**1902-5, Ooaza Kamekubo Ooi-machi Iruma-gun Saitama-ken(JP)**

(72) Inventor: **Nomura, Takeshi**
**1902-5, Ooaza Kamekubo Ooi-machi Iruma-gun Saitama-ken(JP)**

(72) Inventor: **Imai, Chihiro**
**49-5, Utsukushigaoka 4-chome Midori-ku Yokohama-shi Kanagawa-ken(JP)**

(72) Inventor: **Yoda, Makoto**
**5024-270, Ooaza Kasahata Kawagoe-shi Saitama-ken(JP)**

(74) Representative: **Northover, Robert Frank et al, Esso Chemical Research Centre P.O. Box 1 Abingdon Oxfordshire, OX13 6BB(GB)**

(54) Catalyst components for polymerization of alpha-olefins and a method for using them.

(57) A supported titanium-containing catalyst component which is useful for the polymerization of olefins, is obtained by contacting magnesium metal, a halogenated hydrocarbon of the general formula: RX (where R is an alkyl, aryl, or cycloalkyl group and X is a halogen atom) and an alkoxy compound of the general formula: $R'_mC(OR')_{4-m}$ (where X' is a hydrogen atom, a halogen atom or an alkyl, aryl, or cycloalkyl group having 1 - 10 carbon atoms, R' is an alkyl, aryl, or cycloalkyl group having 1 - 20 carbon atoms, and m is 0, 1 or 2) to obtain a magnesium-containing solid and contacting said solid with a carboxylic acid or derivative thereof and thereafter with hydrogen chloride and finally with a titanium compound such as titanium tetrachloride. The catalyst component employed in combination with aluminium co-catalyst is useful for the polymerization of alpha-olefins.

EP 0 044 635 A1

# CATALYST COMPONENTS FOR POLYMERIZATION OF ALFA-OLEFINS 0044635
## AND A METHOD FOR USING THEM

This invention relates to catalyst components for polymerization of alpha-olefins and a method for using such components and more particularly, it relates to supported titanium catalyst components which exhibit high activity and high stereoregularity and can produce a polymer having a uniform particle diameter, improved average particle size, i.e. increased particle size, and a method for using them.

Heretofore, in the process for producing polyolefins, especially polypropylene, using Ziegler-Natta catalysts, many attempts have been made to obtain a catalyst exhibiting high activity and high stereoregularity with the ultimate purpose of offering the thus-obtained polymers serviceable as such as products without further treatment.

In recent years, in order to enhance polymerizing ability per unit amount of titanium in a titanium containing catalyst, development of supported type catalysts in which titanium is supported on various carriers, particularly magnesium compounds, have been advanced with considerable success, but the ultimate catalyst is still to be obtained.

Attempts to obtain a catalyst which can control the particle size of the obtained polymer while retaining high activity and high stereoregularity are being made.

In general, it is commonly believed that the shape of the polymer obtained by using a Ziegler-Natta catalyst is greatly influenced by the shape of the catalyst component used. In the case of the supported type catalysts, several attempts have been made to control the shape of the such catalysts, but the number is not large.

As for the supported type catalysts utilizing a magnesium compound, especially magnesium chloride, as a carrier, there are known, for example, a method which comprises spray drying molten magnesium chloride to obtain spherical particles, which are then used to support titanium tetrachloride in a suspended form ([1] Japanese Patent Application Laid-open No. 65999/1974 and [2] Japanese Patent Application Laid-open No. 38590/1977) and a method which comprises supporting titanium tetrachloride in a suspended form on classified powdered magnesium chloride ([3] Japanese Patent Application Laid-open No. 127185/1976).

Further, there is known a method which comprises reacting metallic magnesium and an organic halide or a magnesium organic compound with an orthosilicic ester to obtain a magnesium compound having a uniform particle diameter, treating it with an electron donative compound and/or a halogen compound to obtain a substance chiefly comprising a magnesium halide, especially magnesium chloride, and supporting titanium tetrachloride on this substance (Japanese Patent Application Laid-open No. 146292/1978). However, with this method, the activity and stereospecificity of the catalyst are not sufficiently high, and although the particle size distribution of the obtained polymer is considerably improved, the size of the particle is still small, and thus not suitable to be used as such as a product without further treatment.

We have been continuously and intensively studying for the purpose of providing a catalyst component which exhibits even higher activity and stereoregularity and can produce a free-flowing polyolefin particularly polypropylene having a narrow particle size distribution with a reduced content of fine powder. In DOS 3032318 published March 26, 1981 there is disclosed a supported titanium catalyst component obtained by contacting at a temperature in the range of 50° to 200°C a magnesium containing solid represented by the formula R'OMgX, wherein R' is an alkyl, aryl or cycloalkyl group having from 1 to about 20 carbon atoms and X is halogen, a titanium compound and one of an electron donor or a compound capable of producing in situ an organic acid ester.

In accordance with one aspect of this invention a catalyst component for polymerization of alpha-olefins is produced by contacting a magnesium containing solid compound obtained by contacting

    (a)   metallic magnesium,

    (b)   a halogenated hydrocarbon of the general formula RX, wherein R is one of an alkyl, aryl or cycloalkyl group having 1 - 20 carbon atoms, and X is a halogen atom, and

    (c)   an alkoxy compound of the general formula: $X'_m C(OR')_{4-m}$ wherein $X'$ is a hydrogen atom, a halogen atom or one of an alkyl, aryl or cycloalkyl group having 1 - 10 carbon atoms, R' is one of an alkyl, aryl, or cycloalkyl group having 1 - 20 carbon atoms, and m is 0, 1 or 2.

with a carboxylic acid or a derivative thereof, then contacting with hydrogen chloride, and subsequently contacting with a titanium compound.

The invention also extends to catalyst systems for polymerization of alpha-olefins comprising the supported titanium-containing catalyst components and an organo-aluminium co-catalyst. In accordance with another aspect of this invention there is provided a process for polymerizing alpha-olefins, for example homopolymerizing an alpha-olefin or copolymerizing it with ethylene or another alpha-olefin in the presence of the catalyst component described above and an organo aluminium compound co-catalyst. As used herein the term "alpha-olefin" excludes ethylene.

The metallic magnesium may be of any form, however a powder form or a chip form is preferred. Prior to use, the metallic magnesium is desirably washed with an inert hydrocarbon, for example, a saturated aliphatic, alicyclic or aromatic hydrocarbon having 6 - 8 carbon atoms and thereafter heat dried in the presence of an inert gas such as nitrogen etc.

The halogenated hydrocarbon of the general formula RX is a compound in which R is an alkyl, aryl or cycloalkyl group having 1 - 20 carbon atoms, preferably 1 - 8 carbon atoms, and X is preferably chlorine or bromine. Illustrative examples thereof are methyl, ethyl, isopropyl, n-butyl, n-octyl and cyclohexyl chlorides and bromides, chlorobenzene and o-chlorotoluene.

The alkoxy compound of the general formula:
$X'_m C(OR')_{4-m}$ (hereinafter simply referred to as the alkoxy compound) is that in which X' is selected from a hydrogen atom, a halogen atom or an alkyl, aryl or cycloalkyl group having 1 - 10 carbon atoms, R' is selected from an alkyl, aryl or cycloalkyl group having 1 - 20 carbon atoms, and m can be 0, 1 or 2.

Illustrative examples of alkoxy compounds wherein m is 0, i.e., orthocarbonic acid esters, include methyl orthocarbonate $[C(OCH_3)_4]$, ethyl orthocarbonate $[C(OC_2H_5)_4]$, propyl orthocarbonate $[C(OC_3H_7)_4]$, butyl orthocarbonate $[C(OC_4H_9)_4]$, isobutyl orthocarbonate $[C(O-i-C_4H_9)_4]$, hexyl orthocarbonate $[C(OC_6H_{13})_4]$ and octyl orthocarbonate $[C(OC_8H_{17})_4]$.

Illustrative examples of alkoxy compounds wherein m is 1, i.e., orthoformic acid ester and their substituted compounds, include those in which X' is a hydrogen atom, such as methyl orthoformate $[HC(OCH_3)_3]$, ethyl orthoformate $[HC(OC_2H_5)_3]$, propyl orthoformate $[HC(OC_3H_7)_3]$, butyl orthoformate $[HC(OC_4H_9)_3]$, isobutyl orthoformate $[HC(O-i-C_4H_9)_3]$, hexyl orthoformate $[HC(OC_6H_{13})_3]$, octyl orthoformate $[HC(OC_8H_{17})_3]$, and phenyl orthoformate $[HC(OC_6H_5)_3]$ ; those in which X' is an alkyl, cycloalkyl or aryl group, such as methyl orthoacetate $[CH_3C(OCH_3)_3]$, ethyl orthoacetate $[CH_3C(OC_2H_5)_3]$, methyl orthopropionate $[CH_3CH_2C(OCH_3)_3]$ and ethyl orthopropionate $[CH_3CH_2C(OC_2H_5)_3]$ . as well as $C_6H_{11}C(OC_2H_5)_3$, $C_6H_5C(OC_2H_5)_3$, $C_6H_5C(OCH_3)_3$, $C_6H_5C(OC_3H_7)_3$, $C_7H_8C(OC_2H_5)_3$, and $C_8H_{11}C(OC_2H_5)_3$ ; those in which the hydrogen atom in the alkyl group is substituted by a halogen atom, such as ethyl orthobromoacetate $[CH_2BrC(OC_2H_5)_3]$, ethyl orthochloroacetate $[CH_2ClC(OC_2H_5)_3]$, ethyl ortho-alpha-bromopropionate $[CH_3CHBrC(OC_2H_5)_3]$, and ethyl ortho-alpha-chloropropionate $[CH_3CHClC(OC_2H_5)_3]$ ; and those in which X' is a halogen atom, such as methyl orthochloroformate

$(ClC(OCH_3)_3)$, ethyl orthochloroformate $(ClC(OC_2H_5)_3)$, propyl orthochloroformate $(ClC(OC_3H_7)_3)$, isobutyl orthochloroformate $(ClC(O-i-C_4H_9)_3)$, octyl orthochloroformate $(ClC(OC_8H_{17})_3)$, phenyl orthochloroformate $(ClC(OC_6H_5)_3)$ and ethyl orthobromoformate $(BrC(OC_2H_5)_3)$.

Compounds wherein m is 2 include ethylidene dimethyl ether $(CH_3CH(OCH_3)_2)$, ethylidene diethyl ether $(CH_3CH(OC_2H_5)_2)$, methylene dimethyl ether $(CH_2(OCH_3)_2)$, methylene diethyl ether $(CH_2(OC_2H_5)_2)$, monochloroacetal $(CH_2ClCH(OC_2H_5)_2)$, dichloroacetal $(CHCl_2CH(OC_2H_5)_2)$, trichloroacetal $(CCl_3CH(OC_2H_5)_2)$, monobromoacetal $(CH_2BrCH(OC_2H_5)_2)$, monoiodoacetal $(CH_2ICH(OC_2H_5)_2)$ and benzaldehyde diethylacetal $(C_6H_5CH(OC_2H_5)_2)$.

In the above-described compounds, the orthoformic acid esters, especially the alkyl esters having 1 - 8 carbon atoms, such as methyl orthoformate, ethyl orthoformate, butyl orthoformate and octyl orthoformate are especially preferred.

The magnesium-containing solid compound is obtained by bringing the alkoxy compound, metallic magnesium and halogenated hydrocarbon into contact. There is no particular restriction on how to contact said alkoxy compound, metallic magnesium and halogenated hydrocarbon, and their contact may be effected by any convenient method. For example the three components can be contacted simultaneously; the metallic magnesium and the halogenated hydrocarbon can be contacted - or one can prepare a compound by contacting these components, e.g. compounds known as the so-called Grignard reagents, such as $ClMgCH_3$, $ClMgC_2H_5$, $ClMgC_3H_7$, $ClMgC_4H_9$, $ClMgC_6H_{13}$, $ClMgC_8H_{17}$, $BrMgC_2H_5$, $BrMgC_4H_9$, $BrMgi-C_4H_9$, $ClMgC_6H_5$ and $BrMgC_6H_5$ and the resulting compound subsequently contacted with said alkoxy compound, or the metallic magnesium ⸺⸺⸺⸺

can be dispersed in a solution of said alkoxy compound in an inert solvent, and the halogenated hydrocarbon added to the resulting suspension. The latter method is especially desirable.

The proportion of said alkoxy compound and metallic magnesium used is desirably such that the number of OR' groups in said alkoxy compound per atom of magnesium in the metallic magnesium is at least one, preferably 1 - 5, and especially 3 - 5. That is, in the case of the alkoxy compound of the formula $X'_2C(OR')_2$, the range of 0.5 mole or more, especially 1.5 - 2.5 moles, of the alkoxy compound per gram atom of magnesium is desirable and in the case of the alkoxy compound of the formula $X'C(OR')_3$, a range of 1/3 mole or more, especially 1 - 5/3 moles, is desirable. The halogenated hydrocarbon is desirably employed in an amount of about 1 - 2 moles per gram atom of magnesium.

The contacting reaction is desirably effected by stirring at a contacting temperature of from $40^\circ C$ to $250^\circ C$, preferably from $60^\circ C$ to $120^\circ C$ for from 1 to 10 hours. The contacting reaction may also be carried out in the presence of one of the inert hydrocarbons mentioned above for drying the metallic magnesium, for example, aliphatic, alicyclic and aromatic hydrocarbons having 6 - 8 carbon atoms. It is not desirable to employ an oxygen containing compound such as an ether or alcohol for this purpose.

In addition, for the purpose of promoting the reaction, iodine, an alkyl iodide, an inorganic halide, such as calcium chloride, copper chloride or manganese chloride or a hydrogen halide may be employed.

The solid prepared by the above described methods is then separated from the reaction system, and is ready for use as the magnesium-containing solid compound to be used in this invention, either as such or after being washed with an inert hydrocarbon.

The magnesium-containing solid prepared as described above is then contacted with a carboxylic acid or a derivative thereof, then contacted with hydrogen chloride, and subsequently contacted with a titanium compound, to provide the catalyst component of this invention.

The carboxylic acid or derivative thereof to be contacted with the magnesium containing solid is preferably an aliphatic, alicyclic or aromatic, saturated or unsaturated carboxylic acid of 1-15 carbon atoms or a derivative thereof.

Illustrative examples of the carboxylic acids include aliphatic saturated carboxylic acids such as formic acid, acetic acid, propionic acid, butyric acid, isobutyric acid, valeric acid, isovaleric acid, trimethylacetic acid, caproic acid, caprylic acid and tartaric acid; aliphatic unsaturated carboxylic acids such as acrylic acid, methylpentenoic acid, ethylcrotonic acid and heptenoic acid; alicyclic carboxylic acids such as cyclohexanecarboxylic acids, cis-1,2-cyclohexanedicarboxylic acid, cyclohexane-1,2-dicarboxylic acid and cyclohexene-1,4-dicarboxylic acid; aromatic monocarboxylic acids such as benzoic acid, p-toluic acid, p-ethylbenzoic acid and p-methoxybenzoic acid; and aromatic dicarboxylic acids such as phthalic acid.

The derivatives of the carboxylic acids include acid anhydrides, acid halides, esters and amides.

Illustrative examples of the acid anhydrides of the carboxylic acids include aliphatic monocarboxylic acid anhydrides such as acetic anhydride, propionic anhydride, butyric anhydride, valeric anhydride and caproic anhydride; aliphatic olefinic monocarboxylic acid anhydrides such as acrylic anhydride, crotonic anhydride, and methacrylic anhydride, alicyclic carboxylic acid anhydrides such as cyclohexanemonocarboxylic anhydride, cyclohexenemono-carboxylic anhydride, cis-1,2-cyclohexanedicarboxylic anhydrides and cis-4-cyclohexene-1,2-dicarboxylic anhydrides; aromatic monocarboxylic acid anhydrides such as benzoic anhydride, p-toluic anhydride, p-ethylbenzoic anhydride and p-methoxybenzoic anhydride; and aromatic dicarboxylic acid anhydrides such as phthalic anhydride.

Illustrative examples of the acid halides of the carboxylic acids include aliphatic monocarboxylic acid halides such as acid chlorides e.g. acetyl chloride, propionyl chloride, n-butylyl chloride etc., acid bromides, e.g. acetyl bromide, n-butylyl bromide etc., and acid iodides, e.g. acetyl iodide and n-butylyl iodide; aliphatic olefinic monocarboxylic acid halides such as acid chlorides, e.g. acryl chloride, crotonyl chloride, methacryl chloride etc., acid bromides, e.g. acryl bromide, and methacryl iodide; alicyclic carboxylic acid iodides, e.g. halides such as cyclohexanecarboxylic acid chloride, cis-4-methylcyclohexanecarboxylic acid chloride, 1-cyclohexenecarboxylic acid chloride, cyclohexanecarboxylic acid bromide and cis-4-methylcyclohexenecarboxylic acid bromide, aromatic monocarboxylic acid halides such as acid chlorides, e.g. benzoyl chloride, p-toluic acid chloride, p-ethylbenzoic acid chloride, p-methyoxybenzoic acid chloride etc., acid bromides, e.g. benzoyl bromide etc., and acid iodides, e.g. benzoyl iodide; and aromatic dicarboxylic acid halides such as phthalic dichloride.

Illustrative examples of the esters of the carboxylic acids include saturated and unsaturated aliphatic carboxylic acid esters such as butyl formate, ethyl acetate, butyl acetate, ethyl butyrate, isobutyl, isobutyrate, diethyl tartrate, ethyl acrylate, methyl meth-acrylate and diethyl maleate; alicyclic carboxylic acid esters such as ethyl cyclohexanecarboxylate; and aromatic carboxylic acid esters such as ethyl ——————

benzoate, methyl p-methoxybenzoate, ethyl p-methoxybenzoate, ethyl p-tert-butylbenzoate, dibutyl phthalatale, diallyl phthalate, ethyl alpha-naphthoate etc.

While illustrative examples of the carboxylic acids and derivatives thereof which can be used in this invention have been exemplified above, this invention is not restricted to these specific examples. Among the carboxylic acids and derivatives thereof, the aromatic carboxylic acids, especially benzoic acid, p-toluic acid and p-methoxybenzoic acid, as well as their derivatives such as the acid anhydrides, acid halides and esters, are preferred.

Further, in accordance with this invention, it is more preferable to use a compound which produces an ester upon reaction with the magnesium containing solid - e.g. a carboxylic acid, a carboxylic acid anhydride, or a carboxylic acid halide - than to use a carboxylic acid ester, because a catalyst of higher activity is obtained. Benzoic acid, benzoic anhydride and benzoic acid chloride are especially preferred.

Although the magnesium-containing solid and the carboxylic acid or derivative thereof may be contacted in any manner, in particular it is desirable to contact them in suspended form in the presence of an inert hydrocarbon having 6 - 8 carbon atoms, preferably at a contacting temperature of from $20^{\circ}$ to $100^{\circ}$C, conveniently for from 0.5 to 10 hours.

The amount of the carboxylic acid or derivative thereof to be used based on the magnesium containing solid is preferably in the range of from 0.01 to 20 moles, especially from 0.1 to 5 moles, of the carboxylic acid or derivative thereof per gram atom of magnesium in said magnesium containing solid.

The magnesium containing solid which has been contacted with the carboxylic acid or derivative thereof is then contacted with hydrogen chloride. Hydrogen chloride is desirably used in gaseous form.

Contact with hydrogen chloride may be effected by separating, washing and suspending the solid in an inert hydrocarbon such as hexane, heptane, cyclohexane, benzene or toluene and/or a halogenated hydrocarbon such as carbon tetrachloride or 1,2-dichloroethane, and thereafter blowing hydrogen chloride gas into the stirred suspension. Alternatively, it may be effected by blowing hydrogen chloride gas into the stirred suspension immediately after contact with the carboxylic acid or derivative thereof.

The amount of hydrogen chloride used is preferably from 0.1 to 10 moles per gram atom of magnesium in said magnesium containing solid. Contact with hydrogen chloride is desirably carried out at a contacting temperature of from $-15^{\circ}C$ to $+25^{\circ}C$, especially from $-5^{\circ}C$ to $+5^{\circ}C$ for a contacting time or from 0.5 to 10 hours and most especially from 1 to 3 hours.

After blowing in the hydrogen chloride, it is desirable to remove hydrogen chloride by raising the temperature to from $30^{\circ}C$ to $100^{\circ}C$ for from 0.5 to 10 hours in an atmosphere of an inert gas. Although removal of HCl can be effected merely by heating in an inert gas atmosphere, it is also possible to heat while blowing an inert gas such as nitrogen gas through the suspension.

The magnesium-containing solid thus treated with hydrogen chloride is separated and if desired washed with an inert solvent such as a saturated hydrocarbon.

The magnesium-containing solid which has been contacted with the carboxylic acid or derivative thereof and with hydrogen chloride as described above is thereafter contacted with the titanium compound so as to provide the catalyst component of this invention. As the titanium compound, titanium tetrahalides, especially titanium tetrachloride, are preferred. In addition, halogen alkolates or halogen phenolates of titanium, such as dichloro di-n-butoxytitanium, trichloroethoxytitanium or dichlorodiphenoxytitanium may also be employed.

Although contact with the titanium compound may be effected by any manner it is especially desirable to add the titanium compound to the hydrogen chloride treated magnesium-containing solid at a contacting temperature in the range of $0^{\circ}C$ to the boiling point of the titanium compound (e.g. $135.4^{\circ}C$ for titanium tetrachloride), preferably from 0.5 to 10 hours. However, if appropriate an inert solvent, e.g. a saturated hydrocarbon having 6 - 8 carbon atoms, may also be employed as a solvent. Furthermore, contact with the titanium compound is not limited to a single operation, and may be carried out twice or more.

The amount of the titanium compound to be used based on the magnesium containing solid is desirably from 0.5 to 40 gram atoms, especially from 5 to 20 gram atoms, calculated as titanium, per gram atom of magnesium contained in said solid.

The thus obtained catalyst component according to this invention is assumed to be a composition comprising the magnesium halide converted from the magnesium containing solid, the titanium compound and the carboxylic acid or derivative thereof and/or the ester produced from the carboxylic acid or derivative thereof, or the compounds in which the above various compounds have been complicatedly combined, as well as the materials used for the various contacting treatments and the substances by-produced from such contacting treatments.

The particles of the catalyst component thus obtained are very uniform, and their average particle diameter is generally about 15 to about 100 microns ($\mu$), with a typical specific surface area, as measured by the BET (Brunouer-Emmett-Teller) method, of 200 $m^2/g$ or higher and a typical pore volume of higher than 0.3 cc/g.

The catalyst component according to this invention is combined with an organic aluminum compound and used as a catalyst for homopolymerizing an alpha-olefin or copolymerizing it with ethylene or other alpha-olefin.

The organic aluminum compound to be combined with the catalyst component on polymerizing an alpha-olefin is preferably that of the general formula: $R_nAlX_{3-n}$ wherein R is an alkyl group or an aryl group, X is a halogen atom, an alkoxy group or a hydrogen atom and n is any number in the range of $1 \leqq n \leqq 3$, and in particular, alkyl aluminum compounds having 1 - 18 carbon atoms, preferably 2 - 7 carbon atoms, such as trialkylaluminums, dialkylaluminum monohalides, monoalkylaluminum dihalides, alkylaluminum sesquihalides, dialkylaluminum monoalkoxides, dialkylaluminum monohalides etc., or mixtures or complexes thereof. Specific examples thereof include trialkylaluminums such as trimethylaluminum, triethylaluminum, tripropylaluminum, triisobutylaluminum, trihexylaluminum etc.; dialkylaluminum monohalides such as dimethylaluminum chloride, diethylaluminum chloride, diethylaluminum bromide, diethylaluminum iodide, diisobutylaluminum chloride etc.; monoalkylaluminum dihalides such as methylaluminum dichloride, ethylaluminum dichloride, ethylaluminum dibromide, ethylaluminum diiodide, isobutylaluminum dichloride etc.; alkylaluminum sesquihalides such as ethylaluminum sesquichloride etc.; dialkylaluminum monoalkoxides such as dimethylaluminum methoxide, diethylaluminum ethoxide, diethylaluminum phenoxide, dipropylaluminum ethoxide, diisobutylaluminum ethoxide, diisobutylaluminum phenoxide etc.; dialkylaluminum hydrides such as dimethylaluminum hydride, di-ethylaluminum hydride, dipropylaluminum hydride, diiso-butylaluminum hydride etc.

Among those, the trialkylaluminums, especially triethylaluminum and triisobutylaluminum are desirable. Further, these trialkylaluminums may be used in combination with other organic aluminum compounds, for example, industrially easily available diethylaluminum chloride,

ethylaluminum dichloride, ethylaluminum sesquichloride, diethylaluminum ethoxide, diethylaluminum hydride, or a mixture or complex thereof.

In addition, although the organic aluminum compound can be employed alone, it is desirable to use it in combination with an electron donative compound. Examples of the electron donative compound include carboxylic acids, carboxylic acid esters, alcohols, ethers, ketones, amines, amides, nitriles, aldehydes, alkolates, compounds in which phosphorus, arsenic or antimony is combined with an organic group via carbon or oxygen, phosphamides, thioethers, thioesters, carbonic acid esters etc., among which preferably employed are the carboxylic acid esters.

Specific examples of the carboxylic acid esters include, but are not limited to, butyl formate, ethyl acetate, butyl acetate, ethyl acrylate, ethyl butyrate, isobutyl isobutyrate, methyl methacrylate, diethyl maleate, diethyl tartrate, ethyl cyclohexanecarboxylate, ethyl benzoate, ethyl p-methoxybenzoate, methyl p-methylbenzoate, ethyl p-tert-butylbenzoate, dibutyl phthalate, diallyl phthalate, ethyl alpha-naphthoate and the like.

Among those, especially alkyl esters of benzoic acid or a nucleus-substituted benzoic acid, such as p-methylbenzoic acid, p-methoxybenzoic acid etc., the alkyl esters having 1 - 8 carbon atoms, are preferably employed. The electron donative compound may be used at the time when the organic aluminum compound is used in combination with the catalyst component, or it may be employed once after contacted with the organic aluminum compound.

The amount of the organic aluminum compound used based on the catalyst component according to this invention is generally 1 - 2000 moles per gram atom of titanium in said catalyst component, particularly 50 - 500 moles being desirable.

The ratio of the organic aluminum compound to the electron donative compound is desirably chosen from such range that the organic aluminum compound is present in an amount of from 0.1 - 10 gram atoms, ——————————

preferably 1 - 5 gram atoms, calculated as aluminum per mole of the electron donative compound.

The catalyst comprising the catalyst component and the organic aluminum compound (and the electron donative compound) thus obtained exhibits extremely excellent performance as a catalyst for homopolymerization of alpha-olefins, especially alpha-olefins having 3 - 6 carbon atoms, for example, propylene, butene-1, 4-methylpentene-1, hexene-1 etc., or for random or block copolymerization of the above-mentioned alpha-olefins, with each other and/or with ethylene.

The polymerization reaction may be effected either in the gaseous phase or in the liquid phase, and in the case of the liquid phase, either an inert hydrocarbon or a liquid monomer may be employed as the liquid phase. Suitable solvents which can be used in carrying out polymerization in a solvent are chosen from the above-mentioned inert hydrocarbons. The polymerization temperature is generally in the range of -80°C to 150°C, preferably 40° - 100°C. The pressure may be, for example, 1 - 40 atms. Further, control of the molecular weight during polymerization is effected in a known manner in which hydrogen or other known molecular weight modifier is present. In copolymerization, where ethylene is employed as a comonomer, its amount is generally up to about 30% by weight based on the alpha-olefin, especially 1 - 15% by weight. The polymerization reaction using the catalyst system according to this invention is carried out by a continuous or batchwise reaction, and conditions may be similar to those conventionally employed.

The process of this invention is particularly important for production of isotactic polypropylene, random copolymers of ethylene and propylene, and block copolymers of propylene and ethylene.

The catalyst component of this invention is, as described above, composed of large and uniform particles, and the polymerization catalyst utilizing this catalyst component has high polymerization activity and high stereoregularity, and the thus obtained alpha-olefin is translucent and has a large particle diameter with a reduced content of fine powders. In addition, this polymer has high free-flowing properties. Accordingly, the catalyst removal step and the atactic polymer removal step is greatly lightened or eliminated, and the obtained polymer can be used as a product as such without pelletization.

This invention is now more particularly described by the following examples, however it should be understood that this invention is not limited to these examples. The percentages (%) indicated in the examples are by weight unless otherwise specified. The polymerization activity $Kc$ is the amount (g) of the polymer produced per gram of the catalyst, and $Kt$ is the amount (kg) of the polymer produced per gram of Ti in the catalyst. The heptane insolubles (hereinafter referred to as H.I.) which represents the proportion of the crystalline polymer which is the residue after extraction with boiling n-heptane for 6 hours using a modified Soxhlet's extractor. The melt flow rate (MFR) was measured according to ASTM D-1238.

The specific surface area and pore volume of the catalyst component were measured using an apparatus SOPRTOMATIC Model 1810 maufactured by CARLO ERBA, and the particle size distribution of the catalyst component was measured using an optical transmission type particle size distribution meter Model SKN 500 manufactured by Seishin Kigyo. Further, the particle size distribution was measured using a standard sieve standardized by W. S. Tyler Co.

Example 1

Preparation of the Magnesium Containing Solid

12.8 g (0.53 mole) of chip-formed metallic magnesium (purity 99.5%, average particle diameter 1.6 mm) and 250 ml of n-hexane were added to a one-liter reactor equipped with a reflux condenser in a nitrogen gas atmosphere. After stirring for one hour at 68°C, the metallic magnesium was removed and dried at 65°C under reduced pressure to obtain the preliminarily activated metallic magnesium.

To the metallic magnesium were added 88 ml (0.53 mole) of ethyl orthoformate and, as a promotor, 0.2 ml of a 10% solution of iodine in methyl iodide to obtain a suspension. A solution of 80 ml (0.8 mole) of n-butyl chloride dissolved in 100 ml of n-hexane was added to the above suspension kept at 55°C, in such way that 5 ml was added dropwise first, and, after stirring for 50 minutes, the rest of the solution was added dropwise over 80 minutes. The reaction was effected at 70°C for 4 hours to obtain a solid reaction product.

This reaction product was washed with 300 ml portions of n-hexane at 50°C six times, and dried at 60°C under reduced pressure to recover 55.6 g of the magnesium containing solid in the form of a white powder. This solid contained 22.5% of magnesium and 34.0% of chlorine, respectively.

Preparation of the Catalyst Component Treatment with Benzoic Anhydride

8.0 g of the obtained magnesium containing solid, 150 ml of n-hexane and 3.0 g (13.3 mole, 0.2 mole per gram atom of magnesium in the magnesium containing solid) of benzoic anhydride were added to a 300 ml reactor equipped with a reflux condenser to obtain a suspension. The contact reaction was effected at 70°C for 2 hours, after which the resulting solid material was separated, and washed with 150 ml portions of n-hexane at 65°C three times.

Treatment with Titanium Tetrachloride

120 ml of titanium tetrachloride was added to the hydrogen chloride treated solid material. After 2 hours contacting treatment at 120°C, the excess titanium tetrachloride was removed. The solid material was filtered out at 120°C, and the thus obtained solid material was washed ten times with 150 ml portions of n-hexane at 65°C and dried at 50°C under reduced pressure for an hour to obtain 7.7 g of the catalyst component having the following composition (Ti 4.1%, specific surface area 35.6 $m^2$/g, pore volume 0.326 cc/g). The particle size distribution of this catalyst component was as follows:

| Particle Size | Percent |
|---|---|
| 100 μ or larger | 0.5% |
| 80 " | 1.5% |
| 60 " | 4.5% |
| 50 " | 6.0% |
| 40 " | 23.5% |
| 30 " | 49.5% |
| 25 " | 6.5% |
| 20 " | 5.0% |
| 15 " | 2.8% |
| Less than 15 μ | 0.2% |

Polymerization of Propylene

To a stainless (SUS 32) autoclave having an internal volume of one liter and equipped with a stirrer was charged a mixture obtained by mixing 71.8 mg of the catalyst component obtained above, a n-heptane solution containing one mole of triethylaluminum (hereinafter referred to as TEAL) in one liter of n-heptane in an amount of 9.7 ml which corresponds to 160 gram atoms, calculated as aluminum, per gram atom of titanium in the catalyst component, and ethyl p-methoxybenzoate in an amount of 0.43 ml which corresponds to 0.29 mole per gram atom of aluminum in said TEAL. The resulting mixture was maintained for 5 minutes. Then 0.6 liter of hydrogen gas as a molecular weight modifier and 0.8 liter of liquefied propylene were charged under pressure, and the reaction system was heated to 68°C to effect polymerization of propylene for 30 minutes. After polymerization, the unreacted propylene was purged off to obtain 327 g (Kc = 4500, Kt = 111) of white translucent propylene powder having an H.I. of 94.0%, an MFR of 4.7 and a bulk density of 0.51 g/cm$^3$. Further, its particle size distribution was as follows:

| Particle Size | | Percent |
|---|---|---|
| 1680 μ or larger | | 0.2% |
| 840 | " | 25.8% |
| 590 | " | 60.5% |
| 500 | " | 6.0% |
| 420 | " | 4.5% |
| 350 | | 2.8% |
| Less than 350 μ | | 0.2% |

Example 2

Preparation of the Catalyst Component Treatment with Benzoic Acid

9.4 g of the magnesium containing solid obtained by the procedure in Example 1, 130 ml of n-hexane and 3.3 g (27.0 mole, 0.33 mole per gram atom of magnesium in the magnesium containing solid) of benzoic acid were contacted at 70°C for 2 hours similarly as in Example 1. The resulting solid material was separated and washed with n-hexane at 65°C.

Treatment with Hydrogen Chloride

150 ml of n-hexane was added to this solid material to obtain a suspension, into which suspension was blown anhydrous hydrogen chloride gas in the amount corresponding to 3 moles per gram atom of magnesium in the above-mentioned magnesium containing solid at -2°C for 3 hours while stirring the suspension. After supply of hydrogen chloride gas was stopped, the suspension was stirred at 65°C for 1.5 hours. The hydrogen chloride treated solid material was separated, and washed with 150 ml portions of n-hexane at 65°C six times.

Treatment with Titanium Tetrachloride

120 ml of titanium tetrachloride was added to the hydrogen chloride treated solid material, and after 2 hours contacting treatment at 120°C, the excess titanium tetrachloride was removed. The solid material was filtered out at 120°C, and the thus obtained solid material was washed with 150 ml portions of n-hexane at 65°C ten times, and dried at 50°C under reduced pressure for an hour to obtain a catalyst component having a titanium content of 2.7%.

Polymerization of Propylene

Using 60.6 mg of the above-obtained catalyst component, polymerization of propylene was carried out as in Example 1, to obtain 164 g (Kc = 2700, Kt = 100) of polypropylene having an H.I. of 93.8%, an MFR of 3.2 and a bulk density of 0.48.

Example 3

Preparation of the Catalyst Component Treatment with Benzoyl Chloride

Using 9.2 g of the magnesium containing solid obtained by the procedure in Example 1, 170 ml of n-hexane and 3.2 ml (27.8 mmole, 0.33 mole per gram atom of magnesium in the magnesium containing solid) of benzoyl chloride, contact reaction was carried out at 70°C for 2 hours as in Example 1. The resulting solid material was separated and washed with n-hexane at 65°C.

Treatment with Hydrogen Chloride

150 ml of n-hexane was added to this solid material to obtain a suspension, into which suspension was blown anhydrous hydrogen chloride gas in the amount corresponding to 1.5 moles per gram atom of magnesium in the above-mentioned magnesium containing solid at 2°C for 1.5 hours while stirring the suspension. After the supply of hydrogen chloride gas was stopped, the suspension was stirred at 60°C for an hour. The hydrogen chloride treated solid material was separated, and washed with 150 ml portions of n-hexane at 65°C six times.

Treatment with Titanium Tetrachloride

120 ml of titanium tetrachloride was added to the hydrogen chloride treated solid material, and after 2 hours contacting treatment at 120°C, the excess titanium tetrachloride was removed. Thereafter, the solid material was filtered out at 120°C, and the thus obtained solid material was washed with 150 ml portions of n-hexane at 65°C ten times and dried at 50°C under reduced pressure for an hour to obtain the catalyst component having a titanium content of 2.1%.

Polymerization of Propylene

Using 84.9 mg of the above-obtained catalyst component, polymerization of propylene was carried out in a similar manner to that in Example 1, to obtain 261 g (Kc = 3080, Kt = 147) of polypropylene having an H.I. of 95.7%, an MFR of 5.2 and a bulk density of 0.49 g/cm$^3$.

Comparative Example 1

Preparation of the Catalyst Component

The same procedure as in Example 1 was repeated except that the treatment with hydrogen chloride was omitted, to obtain the catalyst component having a titanium content of 2.4%.

Polymerization of Propylene

Using 81.3 mg of the above-obtained catalyst component, polymerization of propylene was carried out as in Example 1, to obtain 258 g (Kc = 3170, Kt = 132) of polypropylene having an H.I. of 93.2%, an MFR of 4.0 and a bulk density of 0.49 g/cm$^3$.

Comparative Example 2

Preparation of the Catalyst Component

The same procedure as in Example 2 was repeated except that the treatment with hydrogen chloride was omitted, to obtain the catalyst component having a titanium content of 3.0%.

Polymerization of Propylene

Using 66.1 mg of the above-obtained catalyst component, polymerization of propylene was carried out as in Example 1, to obtain 150 g (Kc = 2270, Kt = 76) of polypropylene having an H.I. of 93.4%, an MFR of 5.0 and a bulk density of 0.48 g/cm$^3$.

Comparative Example 3

Preparation of the Catalyst Component

The same procedure as in Example 3 was repeated except that the treatment with hydrogen chloride was omitted, to obtain the catalyst component having a titanium content of 2.1%.

Polymerization of Propylene

Using 59.3 mg of the above-obtained catalyst component, polymerization of propylene was carried out as in Example 1, to obtain 164 g (Kc = 2770, Kt = 132) of polypropylene having an H.I. of 95.1%, an MFR of 4.1 and a bulk density of 0.50 g/cm$^3$.

CLAIMS

1. A supported titanium-containing catalyst component characterized in that the component is prepared from a magnesium-containing compound obtained by contacting: (a) metallic magnesium, (b) a halogenated hydrocarbon of the general formula RX (wherein R is an alkyl, aryl or cycloalkyl group having 1 - 20 carbon atoms and X is a halogen atom), and (c) an alkoxy compound of the general formula: $X'_m C(OR')_{4-m}$ (wherein X' is a hydrogen atom, a halogen atom or an alkyl, aryl, or cycloalkyl group having 1- 10 carbon atoms, R' is an alkyl, aryl or cycloalkyl group having 1 - 20 carbon atoms, and m is 0, 1 or 2); by contacting the magnesium-containing compound with a carboxylic acid or a derivative thereof, thereafter contacting with hydrogen chloride, and subsequently containing with a titanium compound.

2. A supported titanium-containing catalyst component according to claim 1, in which the metallic magnesium is dispersed in a solution of the alkoxy compound in an inert solvent to obtain a suspension and the halogenated hydrocarbon is added to the resulting suspension.

3. A supported titanium-containing catalyst component according to claim 1 or claim 2, in which the alkoxy compound is a compound wherein m equals 1.

4. A supported titanium-containing catalyst component according to claim 3, in which the alkoxy compound is ethyl orthoformate.

5. A supported titanium-containing catalyst component according to any of claims 1 to 4, in which the magnesium-containing compound is contacted with an aromatic carboxylic acid or a derivative thereof.

6.  A supported titanium-containing catalyst component
according to claim 5 in which the magnesium-containing
compound is contacted with benzoic acid, p-toluic acid,
plmethoxybenzoic acid or a derivative of one of these acids.

7.  A supported titanium-containing catalyst component
according to claim 6 in which the magnesium-containing
compound is contacted with benzoic acid, benzoic anhydride
or benzoic acid chloride.

8.  A supported titanium-containing catalyst component
according to any of claims 1 - 7, in which the titanium
compound is $TiCl_4$.

9.  A supported titanium-containing catalyst component
according to any of claims 1 to 8, in which the proportion
of the halogenated hydrocarbon to magnesium metal used is
from 1 to 2 moles of halogenated hydrocarbon per gram atom
of magnesium.

10.  A supported titanium-containing catalyst component
as claimed in any of claims 1 to 9, in which the proportion
of alkoxy compound to magnesium used is such that there are
from 1 to 5 OR' groups in the alkoxy compound per atom of
magnesium.

11.  A supported titanium-containing catalyst component
as claimed in any of claims 1 to 10, in which the proportion
of carboxylic acid or derivative thereof to magnesium in the
magnesium-containing solid is from 0.01 to 20 moles per gram
atom of magnesium.

12.  A supported titanium-containing catalyst component
as claimed in any of claims 1 to 11, in which the proportion
of hydrochloric acid to magnesium is from 0.1 to 10 moles of
hydrogen chloride per gram atom of magnesium in the magnesium
containing solid.

13. A process for the preparation of a supported titanium-containing catalyst component, in which a magnesium-containing compound is prepared by contacting:

    (a)   metallic magnesium;

    (b)   a halogenated hydrocarbon of the general formula RX as defined in claim 1; and

    (c)   an alkoxy compound of the general formula $X'_m C(OR')_{4-m}$ as defined in claim 1,

and the formed magnesium-containing compound is contacted first with a carboxylic acid or a derivative thereof, thereafter with hydrogen chloride and finally with a titanium compound.

14. A catalyst system for the polymerization of alpha-olefins characterized by the supported titanium-containing catalyst component of claims 1 - 12 and an organo-aluminium co-catalyst.

15. A process for polymerization of alpha-olefins which is characterized by homopolymerizing an alpha-olefin or copolymerizing it with ethylene or other alpha-olefins in the presence of the catalyst system of claim 14.

| | European Patent Office | **EUROPEAN SEARCH REPORT** | Application number<br>EP 81 30 2977 |
|---|---|---|---|

| DOCUMENTS CONSIDERED TO BE RELEVANT | | | CLASSIFICATION OF THE APPLICATION (Int Cl ) |
|---|---|---|---|
| Category | Citation of document with indication, where appropriate of relevant passages | Relevant to claim | |
| | FR - A - 2 324 652 (MONTEDISON)<br> * Claims 1-4,6,8,9,11-13; page 2, line 15 - page 3, line 8; page 5, lines 14-35; page 6, lines 21-33; page 7, lines 7-34; page 9, lines 44-30 *<br>& GB - A - 1 550 195<br><br>-- | 1,5-8,<br>11-15 | C 08 F    10/00<br>4/64<br>4/02 |
| | FR - A - 2 353 572 (MONTEDISON)<br> * Claims 1-8; page 1, lines 35-39; page 2, lines 1-7; lines 30-38; page 4, line 28 - page 5, line 9 *<br>& GB - A - 1 550 980<br><br>-- | 1,13-<br>15 | TECHNICAL FIELDS SEARCHED (Int Cl ) <br><br>C 08 F    10/00-<br>10/14<br>110/00-<br>110/14<br>210/00-<br>210/16<br>4/64<br>4/62<br>4/02 |
| | BE - A - 855 707 (STANDARD OIL CY)<br> * Claims 1,2,4,6,8; page 5, lines 20-23 *<br>US - A - 4 258 168 (published 24-03-1981)<br><br>---- | 1,3,4,<br>13-15 | |
| | | | CATEGORY OF CITED DOCUMENTS<br><br>X: particularly relevant<br>A: technological background<br>O: non-written disclosure<br>P: intermediate document<br>T  theory or principle underlying the invention<br>E  conflicting application<br>D. document cited in the application<br>L  citation for other reasons<br><br>&  member of the same patent family corresponding document |

| | The present search report has been drawn up for all claims | | |
|---|---|---|---|
| Place of search<br>The Hague | Date of completion of the search<br>28-10-1981 | Examiner<br>WEBER | |

EPO Form 1503.1   06.78